**Europäisches Patentamt**

**European Patent Office**

(19)

**Office européen des brevets**

(11) Veröffentlichungsnummer: **0 151 260**
**B1**

(12) **EUROPÄISCHE PATENTSCHRIFT**

(45) Veröffentlichungstag der Patentschrift:
19.04.89

(51) Int. Cl.⁴: **G 11 B 17/038,** G 11 B 33/14,
G 11 B 23/03

(21) Anmeldenummer: 84114902.4

(22) Anmeldetag: 07.12.84

(54) **Magnetplattenspeicher mit in einem teilweise federnd ausgebildeten Gehäuse beidseitig gelagerten Plattenstapel.**

(30) Priorität: 07.02.84 DE 3404208

(43) Veröffentlichungstag der Anmeldung:
14.08.85 Patentblatt 85/33

(45) Bekanntmachung des Hinweises auf die Patenterteilung:
19.04.89 Patentblatt 89/16

(84) Benannte Vertragsstaaten:
AT CH DE FR GB IT LI NL

(56) Entgegenhaltungen:
EP-A-0 064 731
GB-A-2 092 834
US-A-3 553 663
US-A-3 817 088
US-A-3 838 464
US-A-4 315 288

REVIEW OF THE ELECTRICAL COMMUNICATION
LABORATORIES, Band 30, Nr. 1, 1982, Seiten 46-56,
Tokyo, JP; Y. MITSUYA u.a.: "Mechanisms for
3.2GByte multi-device disk storage"
MINI-MICRO SYSTEMS, Band 16, Nr. 2, Februar
1983, Seiten 143-148, Denver, Colorado, US; J.
SWARTZ: "Motor in spindle gives micro-
Winchester room for 140M bytes"

(73) Patentinhaber: **Siemens Aktiengesellschaft Berlin
und München, Wittelsbacherplatz 2, D-8000
München 2 (DE)**

(72) Erfinder: **Biermeier, Johann, Dipl.- Ing. (FH),
Joergstrasse 82, D-8000 München 21 (DE)**
Erfinder: **Olbrich, Otto, Dipl.- Ing., Birkenstrasse
39, D-8028 Taufkirchen (DE)**
Erfinder: **Dierkes, Albert, Dipl.- Ing. (FH),
Galileistrasse 10, D-8033 Planegg (DE)**

EP 0 151 260 B1

## Beschreibung

Die Erfindung bezieht sich auf einen Magnetplattenspeicher gemäß dem Oberbegriff des Hauptanspruches.

Bei Magnetplattenspeichern unterscheidet man gewöhnlich zwischen Festplattenspeichern und Wechselplattenspeichern. Die technische Entwicklung geht weiterhin ständig zu höheren Speicherkapazitäten, einerseits sowohl hinsichtlich der Spurdichte und der Bitdichte als Charakteristik für die Speicherkapazität pro Plattenfläche, als auch hinsichtlich des mechanischen Aufbaus, um möglichst viele Magnetplatten in einem vorgegebenen Einbauraum unterzubringen. Ein Beispiel dafür ist der sogenannte 5 1/4 Zoll Festplattenspeicher, dessen Magnetplatten nach Industriestandard einen Außendurchmesser von 130 mm und einen Innendurchmesser von 40 mm aufweisen. Für diesen Speichertyp hat sich als Standard in Analogie zu den Abmessungen von konkurrierenden Floppy Disk Laufwerken ein Einbauraum mit einer Einbauhöhe von 82,5 mm und einer Grundfläche von 146 mm x 203 mm als Einheitsgröße herausgebildet, der für das gesamte Gerät einschließlich Gehäuse und zugehöriger Elektronik zur Verfügung steht.

Dem Entwicklungsziel nach höheren Speicherkapazitäten ordnet sich, neben dem Bemühen, die Aufzeichnungsdichte auf den Magnetplatten selbst zu erhöhen, das Bestreben unter, möglichst viele Magnetplatten in diesem vorgegebenen Einbauraum unterzubringen. Im Sinne dieses konstruktiven Bestrebens sind Ausführungen von 5 1/4 Zoll Festplattenspeichern bekannt geworden, bei denen der Antriebsmotor für den Plattenstapel soweit miniaturisiert und derart konstruktiv ausgelegt ist, daß er selbst bei einem vorgegebenen Innendurchmesser der Speicherplatten von 40 mm immer noch in die Nabe des Plattenstapels einzubauen ist. Damit ist ein die Bauhöhe von konventionellen Festplattenspeichern wesentlich mitbestimmendes Element in die Nabe des Magnetplattenstapels integriert und somit die für den Plattenstapel nutzbare Einbauhöhe erweitert. Auf diese Weise sind Plattenstapel möglich geworden, die bis zu acht Magnetplatten übereinander gestapelt enthalten. Die restliche Einbauhöhe wird für das Gehäuse und die Geräteelektronik benötigt.

Wie erwähnt, ist die Aufzeichnungsdichte auf der Magnetplatte das Produkt aus Schreibdichte mal Spurdichte. Insbesondere aus der Spurdichte mit beispielsweise über 1000 Spuren/Zoll ergibt sich für den Fall der vorliegenden Erfindung weiterhin ein wesentliches Kriterium für den konstruktiven Aufbau eines Magnetplattenspeichers. Diese hohe Spurdichte erfordert eine möglichst schwingungssteife Lagerung der Spindel des Plattenstapels in dem Gehäuse. Damit werden für diesen Speichertyp Forderungen erhoben, die bisher nur bei größeren Plattenspeichern, z. B. den 14 Zoll Plattenspeichern eine Rolle spielten.

Bei Plattenspeichern größeren Durchmessers ist es allgemein bekannt, in zum Teil sehr aufwendig ausgeführten Konstruktionen die Spindel des Plattenstapels einseitig in einer schweren Grundplatte zu lagern. Das gilt insbesondere für Wechselplattenspeicher, bei denen der Plattenstapel aus dem Magnetspeichergerät entnehmbar sein muß. Andererseits sind beispielsweise aus EP-A1-0 064 731 auch Aufbauten bekannt, bei denen die Spindel in einem den Stapel umschließenden starren Gehäuse beidseitig gelagert ist. Um eine möglichst schwingungssteife Spindellagerung zu erreichen, werden bei dieser beidseitigen Lagerung die Lager in axialer Richtung verspannt, indem man ein Festlager und ein Loslager verwendet. Dem Loslager benachbart, ist eine Feder vorgesehen, die beide Lager nach dem Zusammenbau so miteinander verspannt, daß eine koaxiale und möglichst spielfreie Spindelführung erzielt wird. Allerdings ist dieses Ziel bei einer Kombination von Fest- und Loslager immer nur bedingt erreichbar. Außerdem wird für den Einbau der Feder zusätzlich Einbauraum benötigt, der damit als nutzbarer Speicherraum verlorengeht und beim Einbau des Motors in die Nabe wertvollen Platz wegnimmt.

Verspannte Lagerstellen, beispielsweise auch um Temperaturtoleranzen aufzufangen, sind als Konstruktionsmerkmal bei Magnetplattenspeichern an sich nicht ungewöhnlich. So ist aus US-A-3 553 663 ein Wechselplattenspeicher bekannt, bei dem die Spindel zweiseitig in einem Motorgehäuse gelagert ist. In einem Flansch, der mit dem Gehäuse verschraubt ist, ist die Spindel über ein Kugellager gelagert. Das andere Spindelende trägt ein zweites Kugellager, das in einer Lagerbuchse angeordnet ist. Diese Lagerbuchse weist einen kreisringförmigen Randbereich auf, der infolge einer reduzierten Dicke elastisch verformbar ist. Auch dieser Randbereich ist an seinem äußeren Umfang mit dem Gehäuse verschraubt. Die axiale Verspannung wird durch eine Mehrzahl von Druckfedern bewirkt, die zwischen der Lagerbuchse und einem Abdeckflansch verspannt angeordnet sind. Längenänderungen der Spindel aufgrund von Temperaturänderungen werden so aufgefangen.

Der vorliegenden Erfindung liegt die Aufgabe zugrunde, für einen Magnetplattenspeicher eine platzsparend gestaltete, beidseitige Lagerung des Plattenstapels in dem Gehäuse zu schaffen, die gegebenenfalls den Einbau eine Antriebsmotors in die Nabe des Plattenstapels erlaubt und dennoch konstruktiv einfach ist. Dabei sollen insbesondere in der Nabe festgelegte Kugellager trotz zulässiger mechanischer Toleranzen im Lageraufbau spielfrei angeordnet sein, wobei die gewünschte Koaxialität der Kugellager ohne Justagen erreicht werden muß. Außerdem soll der Plattenstapel einschließlich der Lagerungen als Modul montiert werden können und auch als fertige, in das Gehäuse eingesetzte Einheit zugänglich sein, um Tests und abschließende Montagevorgänge, wie Auswuchten usw. im eingebauten Zustand vornehmen zu können.

Diese Aufgabe wird gemäß der vorliegenden Erfindung bei dem eingangs genannten Magnetplattenspeicher mit den im Kennzeichen des Patentanspruches 1 beschriebenen Merkmalen gelöst. Diese Lösung zeichnet sich insbesondere dadurch aus, daß eine eindeutig spielfreie Lagerung der Spindel des Plattenstapels mit Hilfe von zwei Festlagern anstelle der üblichen Kombination von Loslager und Festlager erzielt wird, so daß das bei einem Loslager immer unvermeidliche Spiel entfällt. Weiterhin ist das Gehäuse durch den federnd gestalteten Bereich so ausgestaltet, daß ein separates Verspannelement nicht benötigt wird. Der dadurch gewonnene Anteil des Einbauraumes kann der nutzbaren Einbauhöhe, d.h. der Höhe des Plattenstapels zugeschlagen werden.

Da die beiden Lagerstellen des Plattenstapels in gegenüberliegenden Wandungen einer einteiligen Tragschale des Gehäuses angeordnet sind, können diese Lagerstellen mit den dazugehörigen Paßflächen in einer Aufspannung hergestellt werden, was für das Erreichen des Zieles der Koaxialität der Spindellager von erheblicher Bedeutung ist.

Dieser Lageraufbau erlaubt es bei einer Ausbildung der Nabe als Hohlkörper, die federnd verspannte Lagerstelle einschließlich der Lagerbuchse im Durchmesser so schmal zu halten, daß die Lageranordnung in den Hohlkörper der Nabe einbezogen werden kann. Dies wiederum ermöglicht einen montagefreundlichen Aufbau des Plattenstapels, mit einer Nabe, die an ihrem der ersten Lagerbuchse benachbarten Ende einen Bund als Anlagefläche für die äußerste der Magnetplatten aufweist, wobei die Magnetplatten, durch Zwischenstücke auf Abstand gehalten, auf die Außenfläche der Nabe aufgeschoben sind. Am anderen Ende besitzt die Nabe eine Eindrehung, in die ein Zentrieransatz eines Spannringes eingesetzt ist, der mit Befestigungsschrauben auf der zugeordneten Stirnfläche der Nabe festgelegt ist. Diese konstruktive Ausbildung ermöglicht es, gegebenenfalls eine schadhaft gewordene Speicherplatte durch Lösen des Spannringes auszuwechseln, ohne dazu einzelne Teile- der Lagerstellen ausbauen zu müssen.

Weitere Einzelheiten und Vorteile ergeben sich für den Fachmann aus der nachfolgenden Beschreibung eines Ausführungsbeispieles anhand der Zeichnung. Dabei zeigen

Fig. 1 und Fig. 2 den Aufbau eines gemäß der Erfindung ausgebildeten Magnetplattenspeichers in je einer Bodenansicht bzw. einer Draufsicht, wobei insbesondere in dem Teilschnitt von Fig. 1 zugleich der prinzipielle Aufbau des Magnetplattenspeichers dargestellt ist, und

Fig. 3 einen Schnitt durch das Gehäuse längs der Schnittlinie III - III mit der Darstellung einer Ausführungsform der Lagerung des Plattenstapels.

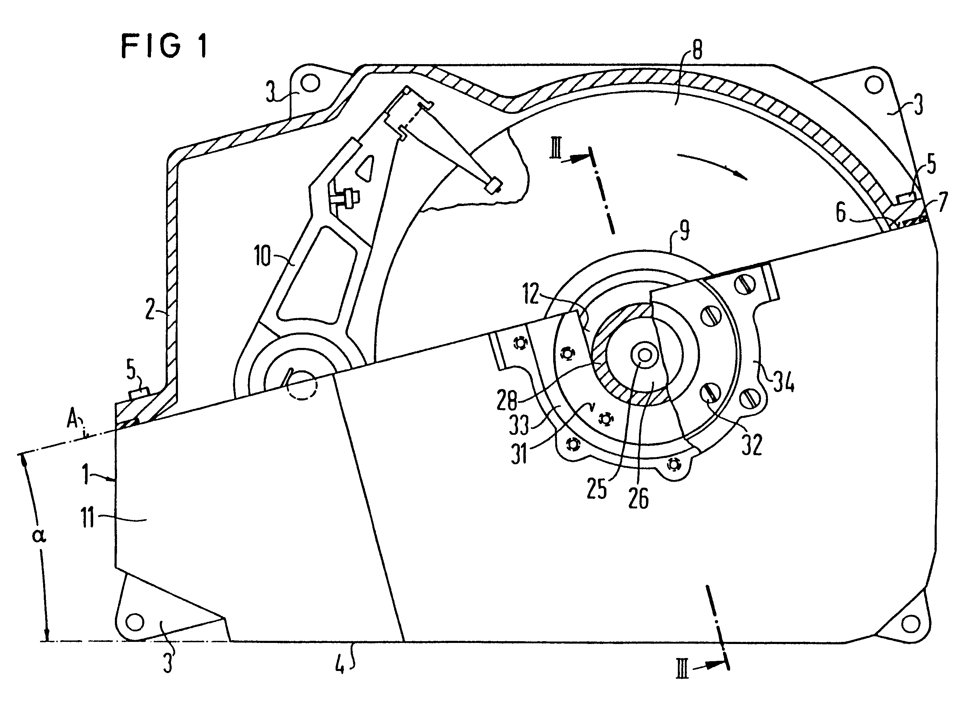

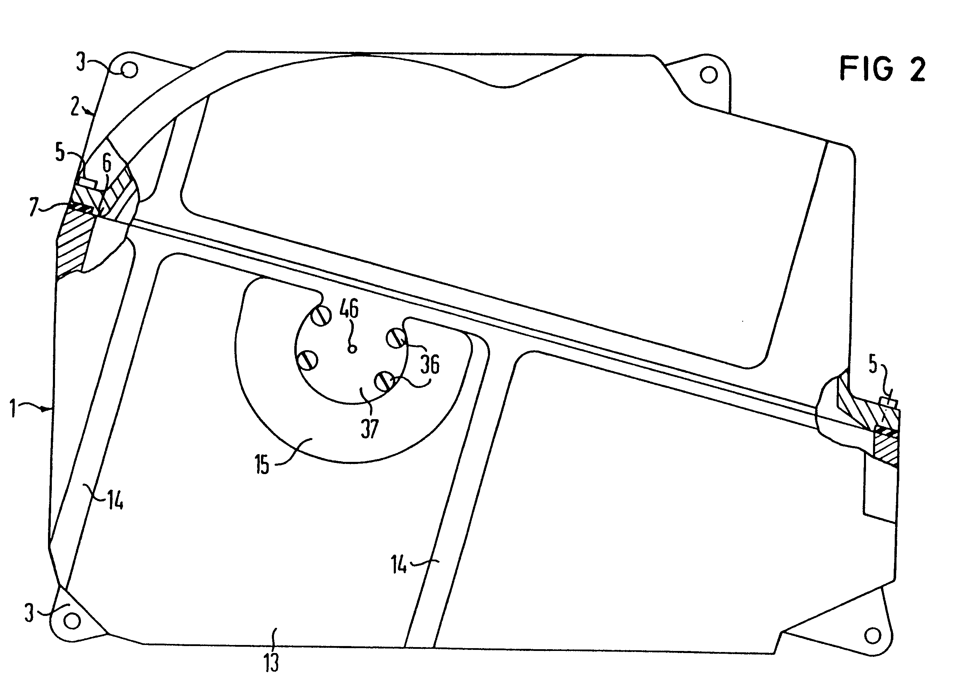

Die in Fig. 1 und 2 gezeigten Ansichten des Gehäuses eines Magnetplattenspeichers veranschaulichen, daß das Gehäuse längs einer diagonal verlaufenden Trennebene A in eine Tragschale 1 und eine Abdeckung 2 unterteilt ist, die gemeinsam einen im wesentlichen rechteckförmigen Kasten bilden. Die Tragschale 1 und der Deckel 2 besitzen jeweils Befestigungsösen 3, mit denen das Gehäuse z. B. über nicht dargestellte Gummipuffer in einem umlaufenden Rahmen angeordnet werden kann.

Die Abdeckung 2 sitzt in der genannten, zu einer Stirnfläche 4 der Tragschale 1 um einen Winkel α geneigten Trennebene A auf der Tragschale 1 auf und ist mit dieser durch Gehäuseschrauben 5 lösbar verbunden. Um eine staubdichte und abgeschirmte Verbindung zwischen Deckel und Tragschale zu schaffen, ist der in der Trennebene A liegende Rand des Deckels 2 so ausgebildet, daß er eine plane metallische Dichtfläche 6 und eine außen liegende Fase aufweist, in die ein umlaufender Dichtungsring 7 eingelegt ist.

Die Abdeckung 2 ist in Fig. 1 teilweise aufgeschnitten dargestellt, um die wesentlichen Baueinheiten im Inneren des Magnetplattenspeichers zu zeigen. So ist ein Plattenstapel 8 sichtbar, der - wie schematisch angedeutet ist - auf einer Nabe 9 angeordnet ist und in Pfeilrichtung umläuft. Seitlich neben dem Plattenstapel ist ein Drehpositionierer 10 angeordnet, der in Betriebsposition gezeigt ist. Eine parallel zur Achse des Plattenstapels 8 liegende Schwenkachse des Drehpositionierers ist in Fig. 1 eben noch sichtbar.

Der in Fig. 1 gezeigte Teilschnitt der Abdeckung 2 läßt auch deren Form erkennen, die einerseits so gewählt ist, daß sie den Plattenstapel in geringem Abstand umschließt, andererseits aber für die Bewegung des Positionierarmes des Drehpositionierers 10 auch zum Abtasten von Randspuren des Plattenstapels 8 noch ausreichend Spielraum läßt.

Der in Fig. 1 gewählte Teilschnitt illustriert außerdem die Bedeutung der gewählten Lage und Neigung der Trennebene A. Einerseits ist diese so gelegt, daß alle konstruktiv wesentlichen Gehäusefunktionen in der Tragschale 1 vereinigt sind, das gilt insbesondere für die beidseitige Lagerung des Plattenstapels 8, aber auch für die Befestigung des Drehpositionierers 10. Andererseits ist die Trennebene A möglichst nahe an und parallel zur Achse des Plattenstapels 11 gelegt und außerdem um den Winkel α geneigt, so daß die Einbautiefe für den Drehpositionierer 10 hinsichtlich Fertigung und Montage optimiert ist. Damit wird mit diesem Aufbauprinzip eine gute Zugänglichkeit der funktionsbestimmenden Bauteile des Magnetplattenspeichers erzielt. Außerdem sind alle wesentlichen, tragenden Elemente des Gehäuses in einem einzigen Werkstück vereinigt. Dies ist insbesondere bedeutsam für die Herstellung, da einander zugeordnete Bohrungen bzw. Paßflächen in der Tragschale 1, insbesondere auch für die Ausbildung der Lagerstellen, in einer Aufspannung hergestellt werden können und somit gekettete Toleranzen vermieden sind.

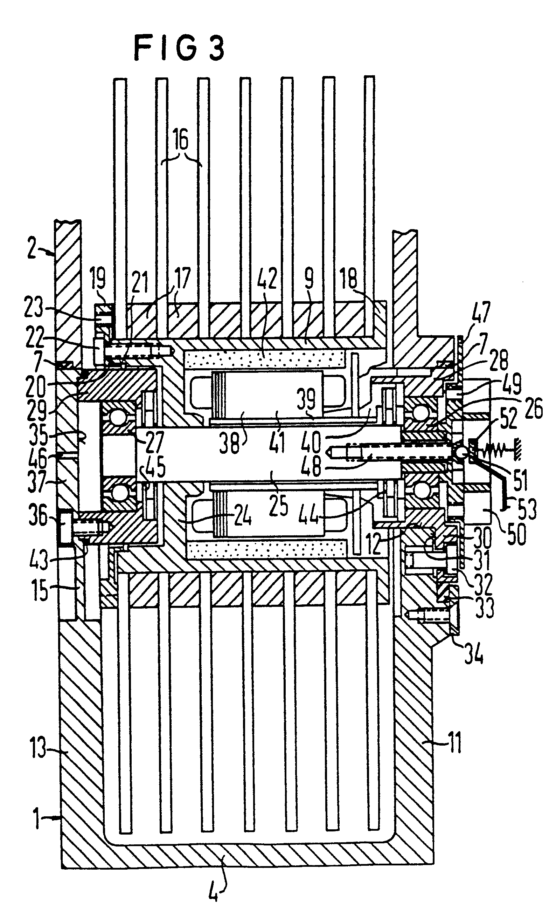

Weiterhin zeigt die in Fig. 1 dargestellte Bodenansicht des Gehäuses bestimmte Einzelheiten der ersten Lagerstelle des Plattenstapels 8, die in Verbindung mit der Beschreibung von Fig. 3 noch näher erläutert werden. Zunächst sei hier nur darauf verwiesen, daß als Lageraufnahmefläche im Tragschalenboden 11 ein Schlitz 12 vorgesehen ist, der zum Rand der Tragschale hin geöffnet ist und am Grund eine 180°-Rundung aufweist. In diesen Schlitz wird das entsprechende Plattenstapellager beim Montieren des Plattenstapels eingeschoben und am Tragschalenboden 11 festgelegt. Weitere Einzelheiten dazu werden später noch näher erläutert.

Fig. 2 zeigt das Gehäuse des Magnetplattenspeichers von der Oberseite und damit Einzelheiten der Tragschalendecke 13 mit der zweiten Lagerstelle für den Plattenstapel 8. Neben Versteifungsrippen 14, die hier senkrecht zur Trennebene A angeordnet sind, ist insbesondere ein nierenförmiger Bereich 15 hervorzuheben, der symmetrisch zu dem Schlitz 12 in dem gegenüberliegenden Tragschalenboden 11 ausgerichtet ist. Die in Fig. 2 gewählte Ansicht kann nicht verdeutlichen, daß dieser Bereich 15 tatsächlich eine Vertiefung in der Tragschalendecke 13 darstellt, jedoch wird dies aus dem in Fig. 3 gezeigten Schnitt ohne weiteres erkennbar werden. Die Wandstärke ist durch diese Vertiefung, lokal begrenzt, so weit herabgesetzt, daß sie nicht mehr vernachlässigbar federt, während die Tragschale 1 ansonsten als verwindungssteifes Gebilde ausgeführt ist. Dieser Bereich 15 wird daher im folgenden als federnder Wandbereich bezeichnet und seine Funktion wird im einzelnen im Zusammenhang mit der detaillierten Beschreibung der zweiten Lagerstelle des Plattenstapels 8 näher erläutert.

Der in Fig. 3 dargestellte Schnitt durch das Gehäuse des Magnetplattenspeichers, längs der in Fig. 1 gezeigten Schnittlinie III - III geführt, illustriert im einzelnen den Aufbau des Plattenstapels 8 und der beidseitigen Lagerung in der Tragschale 1. Die Nabe 9 ist als Hohlkörper ausgebildet. Auf ihre Außenfläche sind eine Mehrzahl von Magnetplatten 16 aufgeschoben und über Zwischenringe 17 auf gleichen Abstand gehalten. Die Nabe besitzt an einem Ende einen radial vorspringenden Bund 18 als Anlagefläche für die äußerste Magnetplatte. Am gegenüberliegenden Stapelende ist ein Spannring 19 vorgesehen, der am inneren Durchmesser einen nach innen vorspringenden Ansatz 20 aufweist und in einer Zentriereindrehung 21 der Nabe 9 sitzt. Der so zentrierte Spannring 19 ist mit Befestigungsschrauben 22 gegen die Stirnfläche der Nabe verspannt und legt damit die Magnetplatten 16 auf dem Nabenkörper kraftschlüssig fest.

Der Spannring 19 übernimmt noch eine zweite Funktion, denn er dient zugleich als eine erste Auswuchtscheibe. Dazu sind auf seiner äußeren Randfläche eine Mehrzahl von Gewindebohrungen 23 konzentrisch angeordnet. In diese werden je nach Bedarf kleine Auswuchtgewichte während eines Auswuchtvorganges eingeschraubt.

Die Nabe 9 besitzt einen Mittelsteg 24, der auf einer umlaufenden Spindel 25 mit Festsitz festgelegt ist. Die Spindel 25 des Plattenstapels 8 weist an jedem Ende einen Spindelzapfen auf, auf denen die Innenringe von Kugellagern 26 bzw. 27 mit Festsitz festgelegt sind. Die Außenringe dieser Kugellager wiederum tragen mit Festsitz eine erste bzw. zweite Lagerbuchse 28 bzw. 29. Beide Lagerbuchsen stehen im eingebauten Zustand des Plattenstapels still.

Die erste Lagerbuchse 28 ist in den in den Tragschalenboden 11 eingelassenen Schlitz 12 eingeschoben und weist einen Flansch 30 auf, dem eine von außen in den Tragschalenboden 11 eingelassene Eindrehung 31 mit einem Bohrungsgrund als Paßfläche zugeordnet ist. Dieser Flansch ist mit weiteren Befestigungsschrauben 32 von außen am Tragschalenboden 11 festgelegt.

Um das Gehäuseinnere im Bereich der Lagerstelle von außen her abzudichten, ist ein Dichtungselement 33 vorgesehen, das den Flansch 30 der ersten Lagerbuchse 28 seitlich umgreifend in die Eindrehung 31 eingelegt und mit Hilfe eines Andruckstückes 34 in die Eindrehung 31 gequetscht ist. Dieses Dichtungselement 33 ist - wie Fig. 1 besser zeigt - ein Ansatzstück des umlaufenden Dichtungsringes 7.

Der anderen Lagerstelle des Plattenstapels 8 zugeordnet, ist die zweite Lagerbuchse 29 mit ausreichendem Spiel in den Hohlraum der Nabe 9 eingesetzt. Mit ihrer nach außen gerichteten Stirnfläche ist sie in eine koaxial zur Plattenstapelachse ausgerichtete, in die Innenfläche der Tragschalendecke 13 eingelassene Zentriereindrehung 35 eingesetzt und dort mit Spannschrauben 36, deren Anordnung in Kombination mit Fig. 2 deutlich ist, festgelegt. Diese Spannschrauben sind am Rande eines Kreissegmentes 37 in Durchgangsbohrungen eingelegt, wobei dieses Kreissegment das Zentrum des federnden Bereiches 15 bildet.

Für das Verständnis der Lagerung des Plattenstapels 8 ist es wesentlich, darauf hinzuweisen, daß der Plattenstapel 8 als fertig montierte Baueinheit in die Tragschale 1 eingesetzt wird. Vor dem Einbau sind die Kugellager 26, 27 axial unbelastet, der axiale Abstand der beiden Paßflächen 31 bzw. 35 der Plattenstapellager ist daher größer als der Abstand zwischen den entsprechenden Anlageflächen der ersten bzw. zweiten Lagerbuchse 28 bzw. 29. So kann der Plattenstapel 8 in die Tragschale 1 eingeschoben werden. Beim Anziehen der Spannschrauben 36 verformt sich der fendernde Bereich 15 geringfügig nach Art einer Membran, die dabei gespannt wird.

Dieses Spannen der Membran wiederum bedingt, daß die beiden Kugellager 26 und 27 axial verspannt werden, wie dies in Fig. 3 übertrieben dargestellt ist. Aufgrund der Verspannung des federnden Bereiches 15 wird die zweite Lagerbuchse 29 in axialer Richtung nach außen gezogen, so daß sich der Außenring des zweiten Kugellagers 27 axial gegenüber seinem Innenring verschiebt. Damit ist dieses Lager in axialer Richtung verspannt und als Folge davon wird die Spindel 25 zusammen mit der gesamten Nabe 9 und ihren Anbauteilen ebenso axial in Richtung zur Tragschalendecke 13 hingezogen. Mit dieser Spindelverschiebung tritt dann die entsprechende axiale Verspannung des ersten Kugellagers 26 ein, dessen Außenring mit Festsitz in der starr angeordneten ersten Lagerbuchse 28 festgelegt ist.

In dem Hohlraum der Nabe 9 zwischen dem Mittelsteg 24 und der ersten Lagerbuchse 28 ist als Innenmotor 38 ausgebildet ein Antriebsmotor für den Plattenstapel angeordnet. Sein feststehender Stator 39 ist in ausreichendem Abstand über die Spindel 25 geschoben und mit einem ringförmigen Befestigungsfuß 40 mit Festsitz in das innere Ende der ersten Lagerbuchse 28 eingepaßt. Dieser Stator trägt eine Statorwicklung 41. Die Stromzuführung zu dieser Wicklung erfolgt über nicht dargestellte Kabel durch eine Öffnung hindurch, die sich aus den unterschiedlichen Durchmessern der Nabeninnenfläche und der Außenfläche der ersten Lagerbuchse 28 ergibt. Der wicklungslose Rotor des Innenmotors 38 besteht aus Permanentmagneten 42 in Verbindung mit dem Nabenkörper, der zugleich ein magnetisches Rückflußjoch bildet.

Für den ordnungsgemäßen Betrieb des Magnetplattenspeichers ist es von außerordentlicher Wichtigkeit, daß der Innenraum des Gehäuses staubfrei gehalten wird. Bei den heute gebräuchlichen Aufzeichnungsdichten einerseits, und der dabei erforderlichen außerordentlich exakten räumlichen Zuordnung von Magnetplatten und hier nicht dargestellten Magnetköpfen andererseits, können bereits kleinste Staubteilchen unzulässige Störungen im Betrieb hervorrufen. Im Zusammenhang mit der Beschreibung der Lagerstelle des Plattenstapels im Tragschalenboden 11 wurde daher bereits darauf hingewiesen, daß die Aufnahmefläche der ersten Lagerbuchse 28 im Schlitz 12 durch das Dichtungselement 33 abgedichtet ist.

In ähnlicher Weise ist die gegenüberliegende Lagerstelle geschützt. Die Stirnfläche der zweiten Lagerbuchse 29 weist eine ringförmige Eindrehung auf, in die ein weiterer Dichtungsring 43 eingelegt ist, der damit die Durchgangsbohrungen in der Tragschalendecke 13 und von einer Seite den Hohlraum der zweiten Lagerbuchse 29 mit dem zweiten Kugellager 27 gegenüber dem Innenraum des Gehäuses abdichtet. Damit wird zugleich vermieden, daß Schmutzteilchen, die von Schmierung und möglichem Abrieb der Kugellager 26 bzw. 27 herrühren, in den Innenraum des Magnetplattenspeichers gelangen, wenn außerdem den Kugellagern 26, 27 benachbart, an den inneren Enden der Lagerbuchsen 28, 29 je eine magnetische Flüssigkeitsdichtung 44 bzw. 45 vorgesehen ist. Solche Flüssigkeitsdichtungen sind handelsübliche Zubehörteile und bedürfen daher keiner weiteren Erläuterung.

Die beiden Lagerstellen sind damit vollständig gegenüber dem Innenraum des Magnetplattenspeichers abgeschottet. Daß das Kugellager 26 über Kanäle mit der Umgebung in Verbindung steht, ist in diesem Zusammenhang sogar erwünscht. Das Problem der staubfreien Abdichtung des Gehäuseinnenraumes ist nämlich so gravierend, daß üblicherweise auch Vorkehrungen getroffen werden müssen, um in extremen Situationen eine zu hohe Druckdifferenz zwischen dem Innenraum des Magnetplattenspeichers und der Umgebung zu vermeiden. Im Gehäuse ist deshalb häufig in einer Durchgangsbohrung ein hier nicht dargestelltes Luftfilter vorgesehen, über das ein Druckausgleich herbeigeführt wird, so daß niemals hohe Druckdifferenzen auftreten, die die nach außen wirkenden Abdichtungen funktionsunfähig werden lassen.

Nun steht zwar das erste Kugellager 26, wie oben angedeutet, mit der Umgebung in Verbindung, jedoch wäre das zweite Kugellager 27, soweit bisher beschrieben, hermetisch abgedichtet. Ein sich im Bereich dieses Kugellagers aufbauender Überdruck könnte jedoch die zugeordnete magnetische Flüssigkeitsdichtung 45 unwirksam werden lassen. Deshalb wird auch dieses Kugellager direkt mit der äußeren Umgebung des Magnetplattenspeichers über einen Luftkanal verbunden, den eine zentral im federnden Bereich 15 angeordnete Entlüftungsbohrung 46 bildet.

Im Zusammenhang mit dem Aufbau des Plattenstapels wurde bereits erläutert, daß der Spannring 19 zugleich eine der zweiten Lagerstelle unmittelbar zugeordnete Auswuchtscheibe bildet. Eine andere Auswuchtscheibe 47 ist dem ersten Kugellager 26 benachbart angeordnet. Diese Auswuchtscheibe besitzt einen Zentrieransatz, der auf den Zapfen der Spindel 25 aufgesetzt und koaxial zur Spindel mit Hilfe einer Zentralschraube 48 festgelegt ist. Auf dem Scheibenumfang sind wiederum Gewindebohrungen 49 zum Aufnehmen von Ausgleichsgewichten gleichmäßig verteilt.

Auch mit der Auswuchtscheibe 47 kann eine weitere Funktion realisiert werden. Im normalen Betrieb des Magnetplattenspeichers "fliegt" bekanntlich ein Magnetkopf in sehr geringem Abstand über die ihm zugeordneten Oberfläche einer Magnetplatte 16 aufgrund eines Luftpolsters, das sich als Folge der großen Relativgeschwindigkeit zwischen Magnetkopf und Plattenoberfläche bildet. Sobald diese Relativgeschwindigkeit abnimmt, droht dieses Luftpolster zusammenzubrechen und der Magnetkopf landet auf der Plattenoberfläche. Dabei ist die Gefahr einer Verletzung der Plattenoberfläche außerordentlich groß. Deshalb muß dafür Sorge getragen werden, daß der Bereich niedriger Relativgeschwindigkeiten sehr schnell durchlaufen wird. Aus diesem Grund ist es zweckmäßig, eine mechanische Bremse vorzusehen, die den Plattenstapel beim Auslaufen sehr schnell zum Stillstand bringt. Die Auswuchtscheibe 47 besitzt daher einen breiten Flansch, der als Scheibe einer im übrigen nicht näher dargestellten Scheibenbremse dienen kann.

Darüber hinaus kann auf die Auswuchtscheibe 47, nach außen ragend, noch ein Ventilatorrad 50 aufgesetzt sein, das zur Kühlung von hier nicht dargestellten, in Höhe dieses Ventilatorrades angeordneten Baugruppen dient.

Schließlich ist es bekanntlich wünschenswert, einen möglichst guten Erdungskontakt für die Nabe 9 und damit den gesamten Plattenstapel herzustellen. Ein solcher Erdungskontakt kann mit einer in den Kopf der Befestigungsschraube 48 eingelegten Kugel 51 erzielt werden, auf der sich ein Kohleplättchen 52 unter Federdruck abstützt. Dieses Kohleplättchen ist, wie angedeutet, an eine Erdungsleitung 53 angeschlossen.

## Bezugszeichenliste

| A | Trennebene |
| α | Neigungswinkel der Trennebene |
| 1 | Tragschale |
| 2 | Abdeckung |
| 3 | Befestigungsösen |
| 4 | Stirnwand der Tragschale |
| 5 | Gehäuseschrauben |
| 6 | plane Dichtfläche |
| 7 | umlaufender Dichtungsring |
| 8 | Plattenstapel |
| 9 | Nabe |
| 10 | Drehpositionierer |
| 11 | Tragschalenboden |
| 12 | Schlitz |
| 13 | Tragschalendecke |
| 14 | Versteifungsrippen |
| 15 | federnder Wandbereich von (13) |
| 16 | Magnetplatten |
| 17 | Zwischenringe |
| 18 | Bund von (9) |
| 19 | Spannring |
| 20 | Ansatz von (19) |
| 21 | Zentriereindrehung in (9) |
| 22 | Befestigungsschrauben für (19) |
| 23 | Gewindebohrungen |
| 24 | Mittelsteg von (9) |
| 25 | Spindel von (8) |

| 26, 27 | 1. bzw. 2. Kugellager |
| 28, 29 | 1. bzw. 2. Lagerbuchse |
| 30 | Flansch von (28) |
| 31 | Eindrehung als Paßfläche für (28) |
| 32 | (weitere) Befestigungsschrauben für (28) |
| 33 | Dichtungselement |
| 34 | Andruckstück für (33) |
| 35 | Zentriereindrehung in (13) |
| 36 | Spannschrauben für (29) |
| 37 | Kreissegment |
| 38 | Antriebsmotor |
| 39 | Stator von (38) |
| 40 | Befestigungsfuß von (39) |
| 41 | Statorwicklung |
| 42 | Rotor von (38) |
| 43 | (weiterer) Dichtungsring |
| 44, 45 | magnetische Flüssigkeitsdichtungen |
| 46 | Entlüfungsbohrung |
| 47 | Auswuchtscheibe |
| 48 | Befestigungsschraube für (47) |
| 49 | Gewindebohrungen in (47) |
| 50 | Ventilatorrad |
| 51 | Erdungskugel |
| 52 | Kohleplättchen |
| 53 | Erdungsleitung |

## Patentansprüche

1. Magnetplattenspeicher mit einem Plattenstapel (8), der beidseitig in einer einteiligen Gehäusetragschale (1) gelagert ist, die in einer zur Plattenstapelachse parallelen Ebene durch eine Abdeckung (2) abgedeckt ist und der zur beidseitigen Lagerung eine umlaufende Spindel (25) und ein Paar von auf Zapfen der Spindel angeordneten Kugellagern (26, 27) aufweist, die über Lagerbuchsen (28, 29) an gegenüberliegenden Wandungen (11, 13) der einteiligen Tragschale in axialer Richtung verspannt festgelegt sind, wobei die eine Wandung (11) der Tragschale im Bereich der Lagerstelle der Spindel einen zum Tragschalenrand (A) hin offenen Schlitz (12) mit einer 180°-Rundung am Grund aufweist, der die eine Lagerbuchse (28) aufnimmt, in der eines der Kugellager (26) jeweils mit Festsitz auf dem Spindelzapfen und in der Lagerbuchse angeordnet ist, dadurch gekennzeichnet, daß auch das andere Kugellager (27) jeweils mit Festsitz in der zweiten Lagerbuchse (29) und auf dem zugeordneten Spindelzapfen angeordnet ist, daß die zweite Lagerbuchse an der Innenseite der gegenüberliegenden Wandung (13) starr festgelegt ist, und daß diese Wandung zum axialen Verspannen der Kugellager einen die zweite Lagerbuchse umgebenden Bereich (15) aufweist, dessen Wandstärke soweit reduziert ist, daß er selbst gegenüber der in sich starren Gehäusetragschale in Richtung der Plattenstapelachse federnd verspannbar ist.

2. Magnetplattenspeicher nach Anspruch 1, dadurch gekennzeichnet, daß der federnde Bereich (15) einen nierenförmigen, symmetrisch zur Spindelachse liegenden Randbereich mit reduzierter Wandstärke und im Zentrum ein in bezug auf diesen Randbereich verstärktes Mittelstück (37) aufweist, das auf der Innenseite koaxial zur Spindelachse eine Zentriereindrehung (35) besitzt, in der die zweite Lagerbuchse (29) mit einem entsprechenden Ansatz zentriert ist und das mit am Umfang verteilt angeordneten Spannschrauben (36) mit der Stirnfläche der zweiten Lagerbuchse verschraubt ist.

3. Magnetplattenspeicher nach Anspruch 2, gekennzeichnet durch einen Dichtungsring (43), der in eine in der gehäuseseitigen Stirnfläche der zweiten Lagerbuchse (29) vorgesehene Eindrehung eingelegt ist und durch eine magnetische Flüssigkeitsdichtung (45), die dem Kugellager (27) benachbart am inneren Ende der zweiten Lagerbuchse (29) angeordnet ist.

4. Magnetplattenspeicher nach Anspruch 3, dadurch gekennzeichnet, daß der federnde Bereich (15) eine zentral angeordnete Durchgangsbohrung (46) aufweist, die einen Druckausgleichskanal zwischen dem abgedichteten Raum des zugeordneten Kugellagers (27) und der Umgebung des Magnetplattenspeichers bildet.

5. Magnetplattenspeicher nach Anspruch 3 oder 4, dadurch gekennzeichnet, daß am inneren Ende der ersten Lagerbuchse (28) dem entsprechenden Kugellager (26) benachbart eine weitere magnetische Flüssigkeitsdichtung (44) angeordnet ist, die den Innenraum des Gehäuses gegenüber der betreffenden Lagerstelle abdichtet.

6. Magnetplattenspeicher nach einem der Ansprüche 1 bis 4, dadurch gekennzeichnet, daß eine Nabe (9) des Plattenstapels (8) als Hohlkörper ausgebildet ist, der einen Mittelsteg (24) aufweist, in dem die Spindel (25) zentrisch mit Festsitz geführt ist, und daß in dem von der Nabeninnenfläche gebildeten Hohlraum ein Antriebsmotor (38) angeordnet ist, dessen Rotor von Permanentmagneten (42) in Verbindung mit der Nabenwand gebildet wird und dessen mit einer Statorwicklung (41) belegter Stator (39) an der ersten Lagerbuchse (28) festgelegt ist.

7. Magnetplattenspeicher nach einem der Ansprüche 1 bis 6, dadurch gekennzeichnet, daß die Tragschale (1) auf der Außenfläche konzentrisch zu der 180°-Rundung des Schlitzes (12) eine Eindrehung (31) aufweist, die als Paßfläche für einen Flanschansatz (30) der ersten Lagerbuchse (28) dient.

8. Magnetplattenspeicher nach Anspruch 7, dadurch gekennzeichnet, daß dieser Flanschansatz (30) der ersten Lagerbuchse (28) seinem Umfang konzentrisch angeordnete Bohrungen und die benachbarte Wandung (11) der Tragschale (1)) diesen Bohrungen zugeordnet, Gewindelöcher zum Aufnehmen von Befestigungsschrauben (32) für die erste Lagerbuchse aufweisen.

9. Magnetplattenspeicher nach einem der Ansprüche 6 bis 8, dadurch gekennzeichnet, daß die Nabe (9) am der ersten Lagerbuchse (28) benachbarten Ende einen Bund (18), als Anlage für die äußerste von Magnetplatten (16) aufweist, daß die Magnetplatten, durch Zwischenstücke (17) auf Abstand gehalten, auf die Außenfläche der Nabe aufgeschoben sind, daß die Nabe am anderen Ende eine Zentriereindrehung (21) besitzt und daß ein Spannring (19) vorgesehen ist, der mit einem Zentrieransatz (20) in diese Eindrehung der Nabe eingesetzt und mit Befestigungsschrauben (22) auf der zugeordneten Stirnfläche der Nabe festgelegt ist.

10. Magnetplattenspeicher nach Anspruch 9, dadurch gekennzeichnet, daß der Spannring (19) als eine erste Auswuchtscheibe ausgebildet ist und auf seinem Umfang gleichmäßig verteilt Gewindebohrungen (23) zum wahlweisen Einsetzen von Ausgleichgewichten besitzt.

11. Magnetplattenspeicher nach Anspruch 10, dadurch gekennzeichnet, daß die inneren Durchmesser des Spannringes (19) und der Nabe (9) größer sind als der Außendurchmesser der zweiten Lagerbuchse (29), so daß der Plattenstapel ohne Abnehmen der Lager durch Lösen des Spannringes (19) auseinandernehmbar ist.

12. Magnetplattenspeicher nach einem der Ansprüche 10 oder 11, dadurch gekennzeichnet, daß an dem der ersten Lagerbuchse (28) zugeordneten Zapfen der Spindel (25) konzentrisch eine zweite Auswuchtscheibe (47) festgelegt ist.

13. Magnetplattenspeicher nach Anspruch 12, dadurch gekennzeichnet, daß diese zweite Auswuchtscheibe (47) auf ihrer Innenfläche einen konzentrisch angeordneten Bund aufweist, der auf den Spindelzapfen aufgeschoben ist und daß eine Zentralschraube (48) vorgesehen ist, mit der diese zweite Auswuchtscheibe an dem zugeordneten Spindelende festgelegt ist.

14. Magnetplattenspeicher nach Anspruch 13, dadurch gekennzeichnet, daß die zweite Auswuchtscheibe einen breiten Flansch aufweist, der als Bremsscheibe für eine mechanische Bremse ausgebildet ist.

15. Magnetplattenspeicher nach Anspruch 14, dadurch gekennzeichnet, daß die zweite Auswuchtscheibe (47) auf ihrer Außenfläche ein Ventilatorrad (50) trägt.

16. Magnetplattenspeicher nach einem der Ansprüche 13 bis 15, dadurch gekennzeichnet, daß der Kopf der Zentralschraube (48) als Erdungskontaktfläche ausgebildet ist und daß ein geerdetes Kohleplättchen (52) vorgesehen ist, das sich unter Federdruck auf dieser Kontaktfläche abstützt.

**Claims**

1. Magnetic disc memory comprising a stack of discs (8) with double sided bearing within a single-part casing support shell (1), which is covered by a cover (2) in a plane parallel to the axis of the stack of discs, and which has for double sided bearing a rotating spindle (25) and a pair of ball bearings (26, 27) which are arranged on journals of the spindle and which are fixed in axial direction in a braced manner by means of bearing bushes (28, 29) on opposite walls (11, 13) of the single-part support shell, one wall (11) of the support shell having in the region of the bearing point of the spindle a slit (12) open towards the support shell edge (A) and with a 180° rounding at the base which receives one bearing bush (28), in which one of the ball bearings (26) is in each case arranged with fixed seating on the spindle journal and in the bearing bush, characterized in that the other ball bearing (27) is also arranged in each case with fixed seating in the second bearing bush (29) and on the associated spindle journal, in that the second bearing bush is rigidly fixed on the inner side of the opposite wall (13), and in that this wall has, for axial bracing of the ball bearings, a region (15) surrounding the second bearing bush, the wall thickness of said region being reduced so far that it itself can be resiliently braced in the direction of the axis of the stack of discs in comparison to the inherently rigid casing support shell.

2. Magnetic disc memory according to Claim 1, characterized in that the resilient region (15) had a kidney-shaped edge region lying symmetrical to the spindle axis and of reduced wall thickness and has in the centre a middle piece (37) which is strengthened in relation to said edge region and which has on the inner side coaxial to the spindle axis a centering tapping (35) in which the second bearing bush (29) is centred with a corresponding shoulder and which is screwed to the end face of the second bearing bush by means of clamping screws (36) arranged distributed on the periphery.

3. Magnetic disc memory according to Claim 2, characterized by a sealing ring (43) which is placed in a tapping provided in the end face of the second bearing bush (29) on the casing side, and by a magnetic liquid seal (45) which is arranged adjacent to the ball bearing (27) at the inner end of the second bearing bush (29).

4. Magnetic disc memory according to Claim 3, characterized in that the resilient region (15) has a centrally arranged through-bore (46) which forms a pressure equalization channel between the sealed space of the associated ball bearing (27) and the environment of the magnetic disc memory.

5. Magnetic disc memory according to Claim 3 or 4, characterized in that at the inner end of the first bearing bush (28) adjacent to the corresponding ball bearing (26) a further magnetic liquid seal (44) is arranged which seals the interior of the casing with respect to the corresponding bearing point.

6. Magnetic disc memory according to one of Claims 1 to 4, characterized in that a hub (9) of the stack of discs (8) is designed as a hollow body which has a centre web (24) in which the spindle (25) is guided centrally with fixed seating, and in that there is arranged in the hollow space formed by the hub inner face a drive motor (38), the rotor of which is formed by permanent magnets (42) in conjunction with the hub wall and the stator (39) of which is provided with a stator winding (41) and is fixed on the first bearing bush (28).

7. Magnetic disc memory according to one of Claims 1 to 6, characterized in that the support shell (1) has on the outer face concentric to the 180° rounding of the slit (12) a tapping (31) which serves as a fitting area for a flange shoulder (30) of the first bearing bush (28).

8. Magnetic disc memory according to Claim 7, characterized in that said flange shoulder (30) of the first bearing bush (28) has on its periphery concentrically arranged bores and the adjacent wall (11) of the support shell (1) has tapped holes associated with said bores for receiving securing screws (32) for the first bearing bush.

9. Magnetic disc memory according to one of Claims 6 to 8, characterized in that the hub (9) has a collar (18) on the end adjacent to the first bearing bush (28) as a bearing surface for the outermost magnetic discs (16), in that the magnetic discs are spaced by intermediate pieces (17) and are pushed onto the outer face of the hub, in that the hub has a centering tapping (21) at the other end, and in that a clamping ring (19) is provided which is inserted with a centering shoulder (20) into this tapping of the hub and is fixed on the associated end face of the hub by means of securing screws (22).

10. Magnetic disc memory according to Claim 9, characterized in that the clamping ring (19) is designed as a first balance disc and has on its periphery uniformly distributed tapped holes (23) for optional insertion of balancing weights.

11. Magnetic disc memory according to Claim 10, characterized in that the inner diameters of the clamping ring (19) and the hub (9) are greater than the outer diameter of the second bearing bush (29) so that the stack of discs can be taken apart without removing the bearings by removing the clamping ring (19).

12. Magnetic disc memory according to one of Claims 10 or 11, characterized in that a second balance disc (47) is fixed concentrically on the journal of the spindle (25) associated with the first bearing bush (28).

13. Magnetic disc memory according to Claim 19, characterized in that said second balance disc (47) has on its inner face a concentrically arranged collar which is pushed onto the spindle journal, and in that a central screw (48) is provided with which said second balance disc is fixed on the associated spindle end.

14. Magnetic disc memory according to Claim 13, characterized in that the second balance disc has a broad flange which is designed as a brake disc for a mechanical brake.

15. Magnetic disc memory according to Claim 14, characterized in that the second balance disc (47) bears an impeller (50) on its outer face.

16. Magnetic disc memory according to one of Claims 13 to 15, characterized in that the head of the central screw (48) is designed as an earthing contact surface, and in that an earthed carbon plate (52) is provided which is supported on this contact surface under spring pressure.


**Revendications**

1. Mémoire à disques magnétiques comportant une pile de disques (8), qui est supportée, sur ses deux côtés, dans une coque de support monobloc (1) du boîtier, qui est recouverte par un capot (2) dans un plan parallèle à l'axe de la pile de disques et comporte, pour le soutien bilatéral, une broche rotative (25) et un couple de roulements à billes (26, 27), qui sont montés sur des tourillons de la broche et sont bloqués par serrage dans la direction axiale, au moyen de coussinets (28, 29) sur des parois opposées (11, 13) de la coque de support monobloc, une paroi (11) de la coque de support comportant, au voisinage du point de support de la broche, une fente (12) s'ouvrant en direction du bord (A) de la coque de support et comportant, au niveau de sa base, une partie arrondie s'étendant sur 180° et logeant un coussinet (28), dans lequel est disposé l'un des roulements à billes (26) monté selon un ajustement serré sur le tourillon de la broche et dans le coussinet, caractérisée par le fait que l'autre roulement à billes (27) est également monté selon un ajustement serré dans le second coussinet (29) et sur le tourillon associé de la broche, que le second coussinet est fixé rigidement sur la face intérieure de la paroi opposée (13) et que cette paroi comporte, pour le serrage axial des roulements à billes, une zone (15), qui entoure le second coussinet et dont l'épaisseur de paroi est réduite au point que cette paroi elle-même peut être serrée élastiquement, dans la direction de l'axe de la pile de disques, dans la coque de support rigide du boîtier.

2. Mémoire à disques magnétiques suivant la revendication 1, caractérisée par le fait que la partie élastique (15) possède une zone marginale en forme de rein, symétrique par rapport à l'axe de la broche et possédant une épaisseur de paroi réduite et, au centre, un élément central (37), qui est renforcé par rapport à cette zone marginale et possède, sur sa face intérieure, coaxialement par rapport à l'axe de la broche, une gorge de centrage (35) tournée dans la masse, dans laquelle le second coussinet (29) est centré au moyen d'un embout saillant correspondant, et est fixé à la face frontale du second coussinet au moyen de vis de serrage (36) réparties sur la circonférence.

3. Mémoire à disques magnétiques suivant la revendication 2, caractérisée par une bague d'étanchéité (43), qui est insérée dans une gorge tournée dans la masse, prévue dans la face frontale, tournée du côté du boîtier, du second coussinet (29), et par une garniture magnétique d'étanchéité aux liquides (45), qui est disposée au voisinage du roulement à billes (27), sur l'extrémité inférieure du second coussinet (29).

4. Mémoire à diques magnétiques suivant la revendication 3, caractérisée par le fait que la partie élastique (15) comporte un perçage traversant central (46), qui forme un canal de compensation de pression entre l'espace étanchéifié du roulement à billes (27) associé et l'environnement de la mémoire à disques magnétiques.

5. Mémoire à disques magnétiques suivant la revendication 3 ou 4, caractérisée par le fait que sur l'extrémité intérieure du premier coussinet (28) et au voisinage du roulement à billes correspondant (26) se trouve disposé une autre garniture magnétique d'étanchéité aux liquides (44), qui étanchéifie l'espace intérieur du boîtier vis-à-vis du point de support considéré.

6. Mémoire à disques magnétiques suivant l'une des revendications 1 à 4, caractérisée par le fait qu'un moyeu (9) de la pile de disques (8) est réalisé sous la forme d'un corps creux, qui possède une barrette centrale (24), dans laquelle la broche (25) est guidée de façon centrée selon un ajustement serré, et que dans la cavité formée par la surface intérieure du moyeu se trouve disposé un moteur d'entraînement (38) dont le rotor est formé par des aimants permanents (42), en liaison avec la paroi du moyeu et dont le stator (39), recouvert d'un enroulement statorique (41), est fixé sur le premier coussinet (28).

7. Mémoire à disques magnétiques suivant l'une des revendications 1 à 6, caractérisée par le fait que la coque de support (1) comporte sur sa surface extérieure d'une manière concentrique par rapport à la partie arrondie, s'étendant sur 180°, de la fente (12), une gorge (31) tournée dans la masse, qui est utilisée comme surface d'ajustement pour une partie saillante (30) d'une bride du premier coussinet (28).

8. Mémoire à disques magnétiques suivant la revendication 7, caractérisée par le fait que cette partie saillante (30) de la bride du premier coussinet (28) comporte des perçages répartis de façon concentrique sur son pourtour, et que la paroi voisine (11) de la coque de support (1), comporte des trous taraudés, associés à ces perçages et logeant des vis (32) servant à fixer le premier coussinet.

9. Mémoire à disques magnétiques suivant l'une des revendications 6 à 8, caractérisée par le fait que le moyeu (9) comporte, sur l'extrémité voisine du premier coussinet (28), un collet (18) servant d'appui pour celui des disques magnétiques (16), qui est le plus à l'extérieur, que les disques magnétiques, maintenus à distance les uns des autres par des entretoises (17) sont emmanchés sur la surface extérieure du moyeu, que le moyeu possède une gorge de centrage (21) tournée dans la masse, au niveau de son autre extrémité, et qu'il est prévu un anneau de serrage (19), qui est insérée, ainsi qu'un embout saillant de centrage (20), dans cette gorge tournée dans la masse du moyeu et est fixée par des vis de fixation (22) sur la surface frontale associée du moyeu.

10. Mémoire à disques magnétiques suivant la revendication 9, caractérisée par le fait que l'anneau de serrage (19) est réalisée sous la forme d'une première rondelle d'équilibrage et possède des trous taraudés (23 ) répartis uniformément sur son pourtour et utilisés pour insérer à volonté des contrepoids.

11. Mémoire à disques magnétiques suivant la revendication 10, caractérisée par le fait que les diamètres intérieurs de l'anneau de serrage (19) et du moyeu (9) sont supérieurs au diamètre extérieur du second coussinet (29), de sorte que la pile de disques peut être démontée sans retrait des roulements, au moyen du desserrage de la bague de serrage (19).

12. Mémoire à disques magnétiques suivant l'une des revendications 10 ou 11, caractérisée par le fait qu'une seconde rondelle d'équilibrage (47) est fixée concentriquement à l'embout saillant de la broche (25), associé au premier coussinet (28).

13. Mémoire à disques magnétiques suivant la revendication 9, caractérisée par le fait que cette seconde rondelle d'équilibrage (47) possède, sur sa surface intérieure, un collet disposé concentriquement et emmanché sur le tourillon de la broche, et qu'il est prévu une vis centrale (48), à l'aide de laquelle cette seconde rondelle d'équilibrage est fixée à l'extrémité associée de la broche.

14. Mémoire à disques magnétiques suivant la revendication 13, caractérisée par le fait que la seconde rondelle d'équilibrage possède une bride large, qui est réalisée sous la forme d'un disque de frein pour un frein mécanique.

15. Mémoire à disques magnétiques suivant la revendication 14, caractérisée par le fait que la seconde rondelle d'équilibrage (47) porte, sur sa surface extérieure, une roue de ventilateur (50).

16. Mémoire à disques magnétiques suivant l'une des revendications 13 à 15, caractérisée par le fait que la tête de la vis centrale (48) est réalisée sous la forme d'une surface de contact de raccordement à la terre et qu'il est prévu une plaquette en charbon (52) raccordée à la terre et prenant appui, sous l'action de la pression d'un ressort, sur cette surface de contact.

# FIG 1

EP 0 151 260 B1

FIG 2

EP 0 151 260 B1

# F I G 3